# EUROPEAN PATENT SPECIFICATION

(11) **EP 2 677 196 B1**
(45) Date of publication and mention of the grant of the patent: **09.09.2015**
(21) Application number: 13173175.4
(22) Date of filing: 21.06.2013
(51) Int. Cl.: F16G 11/04

(54) **Rope anchoring device**
Seilverankerungsvorrichtung
Dispositif d'ancrage de câble

(30) Priority: 21.06.2012 IT VA20120018
(43) Date of publication of application: 25.12.2013
(73) Proprietor: VHT Varese Hoisting Technology Srl, 20121 Milan (IT)
(72) Inventor: Donati, Libero, 21040 CASTRONNO (VA) (IT)
(74) Representative: Baroni, Matteo

(56) References cited:
- GB-A- 811 305
- US-A- 2 540 887
- US-A- 2 977 654

## Description

### FIELD OF THE INVENTION

The present invention relates to a rope anchoring device, commonly called "rope wedge socket", formed by several parts arranged and assembled in order to allow the connection of the end of a rope to a fixed point, for its anchoring.

### DESCRIPTION OF THE PRIOR ART

Several rope anchoring devices to a fixed point are known in the art. Said anchoring devices are formed by several elements, typically made of metal, among which an external containment body connected to a fixed point by means of a pin-hinge coupling, and a second holding element inserted in the external body. The shape of the holding elements is usually cuneiform and is such that, once the rope is interposed, the traction transmitted by the latter provokes a reciprocal reaction of compression, which determines the fact that the end of the rope is tightly hold by the device. The connection of the external body to the fixed point, for example by means of a pin inserted in appropriate seats, allows the swinging of the device and of the rope that is anchored therein.

The anchoring devices can thus be applied in combination with lifting apparatuses, such as, for example, tackles. Since the anchoring devices contribute to the holding of suspended weights, their reliability is crucial to avoid accidents.

The external body of some anchoring devices of the type known in the art, is generally obtained by a casting process or by welding sheet metals subsequently machined to make the seat for the hinge connection with the fixed point. The holding element is generally obtained by a casting or pressing process or by machining. The patent US 2,977,654 describes an anchoring device, whose external body is made by casting of high manganese steel or of carbon steel or of other alloy steels.

The adoption of elements obtained by casting or welding processes, due to the nature of the processes themselves, introduces criticalities (e.g. inclusions, cracks etc.), which determine the need to perform specific surveys, such as radiographic or magnetoscopic checks, on the elements before installing the anchoring devices.

The geometrical and dimensional tolerances that can be obtained by the aforementioned casting or welding processes also determine a localized contact between the rope and the elements of the device, which typically generate non-uniform specific pressures, that are very high at the contact points, which involve breaking risks in the strands forming the rope. Anchoring devices comprising lateral plates are also known in the art. The patent GB811305 refers to an anchoring device comprising lateral plates spaced from each other and assembled by a plurality of screws, within which a cuneiform holding element can be inserted, which, when a rope is interposed, is adapted to abut specific surfaces that exert a gripping force on the rope.

The known configurations of the anchoring devices comprising lateral plates, however, suffer from the disadvantage of having a low resistance to the high stresses transmitted from the rope under load, and at the same time suffer from the disadvantage of generating a localized contact between the rope and the elements of the device, which typically generate non-uniform specific pressures, very high at the contact points, which involve breaking risks in the strands forming the rope.

### SUMMARY OF THE INVENTION

The main purpose of the present invention is thus to solve the drawbacks of the rope anchoring devices of the type known in the art.

In the scope of this purpose, the aim of the present invention is to provide a rope anchoring device which does not need critical and expensive checks, such as X-rays or magnetoscopic checks.

The aim of the present invention is also to provide a rope anchoring device which uniformly distributes the contact pressure between the rope and the device.

These tasks are achieved by an anchoring device as provided in the attached claims, which form an integral part of the present description.

In particular, the anchoring device according to the present invention, comprises a containment element (which includes plates, spacing elements and retaining elements) and an holding element obtained by manufacturing processes that do not introduce criticalities implied by their specificity and designed in such a way that the specific pressure on the rope is uniformly distributed.

In the invention, the containment elements comprise plates or brackets made of appropriately shaped sheet metal and assembled by means of spacing elements and preferably by means of movable connections, between which the holding elements (jaws or retaining elements, and wedge) are interposed.

According to the present invention, there are no criticalities in the area in which the seats of the anchoring hole are provided, intended to be used for the fastening pin to a fixed point, since thank to the use of appropriately shaped sheet metals assembled by preferably movable joints, no risk of inclusions or cracks emerges (that, on the contrary, would be possible in the casting and welding processes). Thus, according to the present invention, there is no need to perform nondestructive checks to test the structural integrity of the components of the anchoring device.

Furthermore, in the anchoring device according to the present invention, the specific pressure between rope and elements of the device is distributed on a larger surface and in an uniform way, thus ensuring a better anchoring. This is possible because the manufacturing processes used for making the jaws (retaining elements) and of the holding wedge (cuneiform holding body) allow a coupling with dimensional and geometrical tolerances such as to ensure a uniform contact between rope and device.

The present invention thus realizes both technical innovation and inexpensiveness, ensuring both a longer life of the rope and a higher safety against fatigue failures with lower manufacturing costs, since it is no longer necessary to perform critical checks of the process. Furthermore the present invention realizes a more robust anchoring device, which is not subject to any structural criticality while under the load of a rope.

### LIST OF THE FIGURES

Further features and advantages of the present invention will become clearer from the following detailed description, which is merely illustrative and non-limitative, and shown in the attached figures, in which:

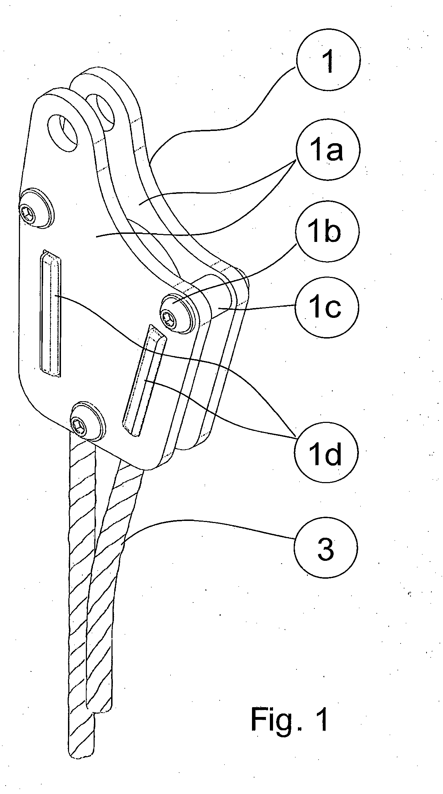

- figure 1 shows a perspective view of the assembled anchoring device according to the present invention;

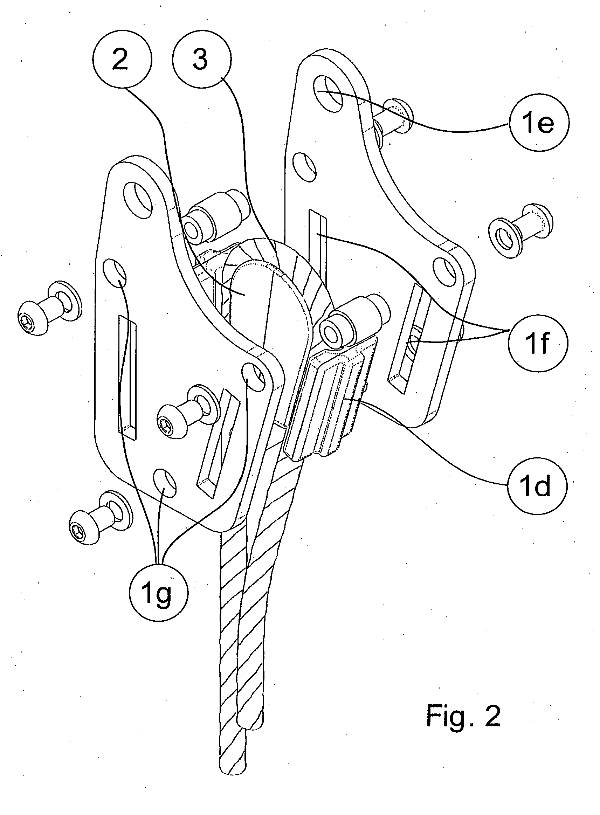

- figure 2 shows an exploded view of the anchoring device of figure 1;

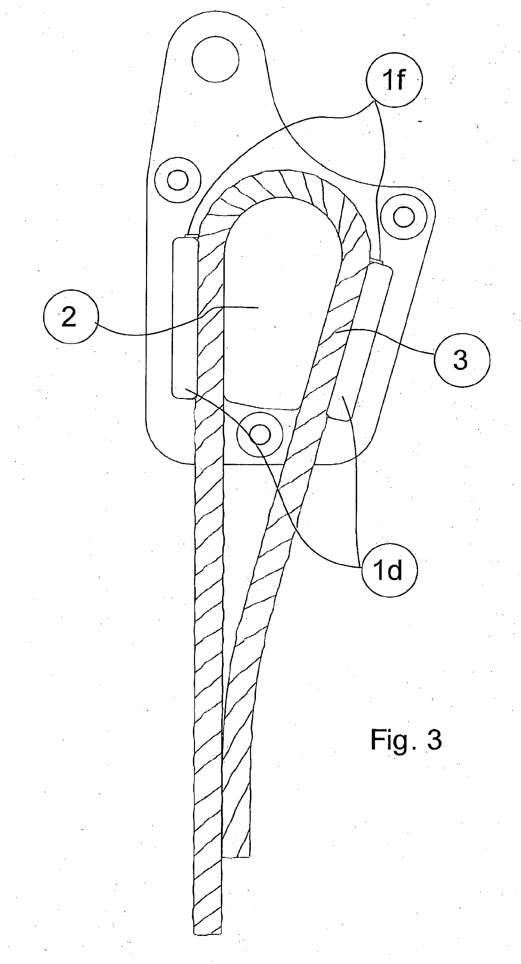

- figure 3 shows a section view according to a middle vertical plane of the anchoring device according to the present invention.

### DETAILED DESCRIPTION OF A PREFERRED EMBODIMENT OF THE INVENTION

The anchoring device according to the present invention will be now described with particular reference to a preferred embodiment, shown in the attached figures and considered here as merely illustrative and non-limitative.

With particular reference to the attached figures, the anchoring device according to the present invention comprises a containment element (1) formed by two brackets made of sheet metal (1a), namely a pair of shaped plates (1a) facing each other in a parallel way.

The brackets are appropriately spaced by spacing elements (1c) and assembled by means of a bolted movable joints (1b). Elongated slots or slits (1f) made in the brackets and appropriately shaped, form the seat of two jaws (1d), namely retaining elements (1d) that constrain the rope within the containment body (1). Said jaws (1d) are made by pressing or forming, and are appropriately shaped in order to allow a uniform bearing constraint with the rope. The geometry of the jaws (1d) and of the seats (1f) made in the brackets (1a) is such as to give them three degrees of freedom of movement and thus to allow their adaptation to the rope (3). In other words, the coupling between the jaws (1d) and the elongated slits (1f) is such as to allow the movements in a longitudinal direction. Moreover, the coupling between the jaws (1d) and the elongated slits (1f) is such as to allow the movements in a transversal and normal direction.

In the present description, the terms: "longitudinal" means parallel to the axis of the rope, namely parallel to the main direction of development of the jaws (1d) and of the elongated slits; "transversal" means transversal to the axis of the rope in the direction of the plane of the bearing surface of the jaws (1d), namely perpendicular to the plates (1a); "normal" means in radial direction with respect to the surface of the rope, in the direction in which the contact forces between rope and jaws (1d) take place.

The range of displacement of the jaws (1d), namely their movement, is limited by protruding parts placed on the jaws themselves.

Furthermore, in the brackets (1a) there are anchoring holes which form the seat for the articulated connection (pin and hinge) of the device and which allow the movable joint to a fixed anchoring point.

The seats (1e) of the hinge joint of the device are made in brackets (1a) obtained by machined or cast metal sheet, and thus they do not introduce criticalities due to sub-superficial defects in the material and consequently they do not necessarily require nondestructive checks on the component. Within the containment body, a holding body (2) having a cuneiform shape is inserted, the rope (3) being arranged on it. Said cuneiform holding body (2) preferably made by means of a casting, pressing or machining process, has an appropriate seat, comprising a shaped edge suitable for accommodating a rope (3) placed between its perimeter and the containment jaws (1d). The traction transmitted by the rope is such as to produce a specific uniform pressure between holding body (2), rope (3) and jaws (1d), such as to guarantee a correct and reliable anchoring of the rope to the device.

The uniformity of the contact pressure is ensured by the seats made in the jaws (1d) in the holding body (2) and by the freedom of movement of the jaws (1d) within the seats (1f) made in the brackets (1a).

Considering the present description, it will be apparent to the person skilled in the art that further variants and modifications are possible, without departing from the scope of the invention as resulting from the attached claims.

The anchoring device may be formed, for example, by a containment body (1) comprising two decomposable brackets (1a), made in shaped sheet metal, within which two jaws (1d) are housed, at least one of which being movable, and have shaped grooves in order to transmit, by an interposed cuneiform holding body (2), a uniform contact pressure on the rope (3) to be anchored.

The anchoring device may comprise non-shaped movable jaws, or shaped having geometry or radius that are different from the diameter of the interposed rope.

The anchoring device may comprise a number of movable jaws (1d) higher than or equal to two.

The anchoring device can be made so that it is not disassembled, being the two brackets (1a) assembled with a non-movable joint (for example by welding, riveting, coupling with interference, etc.)

The anchoring device may also be made with brackets obtained by pressing, casting and/or machining processes.

The anchoring device may anyway be realized, characterized in that it comprises jaws (1d), at least one of these being movable.

## Claims

1. Rope anchoring device, comprising
a pair of plates (1a) facing parallelly to each other,
a cuneiform holding body (2) adapted to be inserted between said pair of plates (1a), said cuneiform holding body (2) comprising a shaped edge suitable to house a rope (3) wound on it,
and further comprising at least a pair of retaining elements (1d) inserted between said plates (1a) and arranged so as to allow the insertion of said cuneiform holding body (2) between them, to exert a gripping force on a rope interposed between said shaped edge and said retaining elements (1d),
**characterized in that**
said anchoring device comprises two respective pairs of elongated slits (1f), each one of said pairs of elongated slits (1f) having a first slit on a first of said plates (1a) and a second slit aligned to said first slit on a second of said plates,
each one of said retaining elements (1d) being inserted in a respective of said pairs of elongated slits (1f).
said pairs of elongated slits (1f) being configured to constrain said retaining elements (1d) to exert said gripping force,
and **in that** the coupling, between at least one of said retaining elements (1d) and said pair of elongated slits (1f) wherein it is inserted, is adapted to allow movements at least in longitudinal direction of at least one of said retaining elements (1d), to exert said gripping force on said rope in a uniform manner.

2. Device according to claim 1, **characterized in that** said coupling between at least one of said retaining elements (1d) and said respective pair elongated slits (1f) is further adapted to allow movements in transversal direction and movements in normal direction of said at least one of said retaining elements (1d), to exert said gripping force on said rope in a uniform manner.

3. Device according to claim 1 or 2, **characterized in that** said coupling, between both said retaining elements (1d) and said respective pair of elongated slits (1f) is further adapted to allow movements of both said retaining elements (1d), to exert said gripping force on said rope in a uniform manner.

4. Device according to any one of the claims from 1 to 3, wherein said retaining elements (1d) comprise a semicircular groove on their internal surface adapted to exert said gripping force.

5. Device according to any one of the claims from 1 to 4, further comprising a plurality of spacing elements (1c) interposed between said pair of plates.

6. Device according to claim 5, **characterized in that** said pair of plates (1a) further comprises a plurality of respective pairs of holes (1g) for fixing said spacing elements, wherein each one of said spacing elements (1c) comprises a central body interposed between said pair of plates (1a), and further comprising retaining means (1b) to constrain said interposed central body to a respective one of said holes (1g).

7. Device according to claim 6, wherein said interposed central body comprises a pair of threaded holes facing respectively each one of said holes (1g), and wherein said retaining means (1b) comprise a plurality of respective threaded screws suitable to engage said threaded holes to constrain said interposed central body.

8. Device according to any one of the claims from 1 to 7, wherein said cuneiform holding body (2) comprises opposite flat faces being spaced from each other so as to be inserted between said pair of plates (1a), and wherein said shaped edge comprises a semicircular portion.

9. Device according to any one of the claims from 1 to 8, wherein said pair of plates (1a) further comprises at least an anchoring hole (1e) placed at an end of said device.

10. Device according to any one of the claims from 1 to 9, configured to be disassembled for inspection, maintenance or replacement of elements of such device.

11. Device according to any one of the claims from 1 to 10, wherein each one of said pair of plates (1a) is made by machining of flat metal sheet.

## Patentansprüche

1. Seilverankerungsvorrichtung, umfassend:
ein Paar von Platten (1a), die parallel zueinander angeordnet sind,
einen keilförmigen Haltekörper (2), der eingerichtet ist, zwischen dem Paar von Platten (1a) eingesetzt zu werden,
wobei der keilförmige Haltekörper (2) einen ausgeformten Rand aufweist, um ein darum gewundenes Seil (3) aufzunehmen, ferner umfassend:
mindestens ein Paar von Halteelementen (1 d), die zwischen die Platten (1a) eingesetzt und eingerichtet sind, das Einsetzen des kegelförmigen Haltekörpers dazwischen zu erlauben, um eine Klemmkraft auf ein Seil auszuüben, das zwischen den ausgeformten Rand und die Halteelemente (1d) eingeschoben ist,
**dadurch gekennzeichnet, dass**
die Seilverankerungsvorrichtung zwei entsprechende Paare von langgestreckten Schlitzen (1f) umfasst, wobei jedes Paar der langgestreckten Schlitze (1f) jeweils einem ersten Schlitz in einer ersten Platte der Platten (1a) und einem zweiten Schlitz, der fluchtend zum ersten Schlitz ist, in einer zweiten Platte der Platten entspricht,
wobei jedes der Halteelemente (1 d) jeweils in ein entsprechendes Paar der langgestreckten Schlitze (1f) eingesetzt ist,
wobei die Paare von langgestreckten Schlitzen (1f) eingerichtet sind, die Halteelemente bei der Ausübung der Klemmkraft zu begrenzen,
und wobei die Verkopplung zwischen zumindest einem der Halteelemente (1d) und einem Paar der langgestreckten Schlitze (1f), in die das Halteelement (1d) eingesetzt ist, eingerichtet ist, um Bewegungen zumindest in Längsrichtung zumindest eines der Halteelemente (1d) zu erlauben, um die Klemmkraft auf das Seil in gleichmäßiger Weise auszuüben.

2. Vorrichtung nach Anspruch 1, **gekennzeichnet dadurch, dass** die Verkopplung zwischen mindestens einem der Halteelemente (1d) und dem entsprechenden Paar langgestreckter Schlitze (1f) ferner eingerichtet ist, Bewegungen in Querrichtung und Bewegungen in Normalrichtung des mindestens einen Halteelements (1d) zu erlauben, um die Klemmkraft auf das Seil in gleichmäßiger Weise auszuüben.

3. Vorrichtung nach Anspruch 1 oder 2, **dadurch gekennzeichnet, dass** die Verkopplung zwischen beiden Halteelementen (1d) und den entsprechenden Paaren der langgestreckten Schlitze (1f) ferner eingerichtet ist, Bewegungen beider Halteelemente (1 d) zu erlauben, um die Klemmkraft in gleichmäßiger Weise auf das Seil auszuüben.

4. Vorrichtung nach einem der vorhergehenden Ansprüche 1 bis 3, wobei die Halteelemente (1d) eine halbkreisförmige Kerbe auf ihrer inneren Oberfläche aufweisen, um die Klemmkraft auszuüben.

5. Vorrichtung nach einem der Ansprüche 1 bis 4, ferner umfassend mehrere Abstandshaltemittel (1 c), eingefügt zwischen das Paar von Platten.

6. Vorrichtung nach Anspruch 5, **dadurch gekennzeichnet, dass** das Paar von Platten (1a) ferner mehrere einander entsprechende Paare von Löchern (1g) umfasst, um die Abstandshaltemittel zu befestigen, wobei jedes der Abstandshaltemittel (1 c) einen zentralen Körper umfasst, der zwischen das Paar von Platten (1a) eingefügt ist, und ferner Haltemittel (1b) umfasst, um den eingefügten zentralen Körper jeweils gegenüber einem der entsprechenden Löcher (1g) zu begrenzen.

7. Vorrichtung nach Anspruch 6, wobei der eingefügte zentrale Körper ein Paar von Gewindelöchern aufweist, die zu einem der entsprechenden Löcher (1g) gerichtet sind, wobei die Haltemittel (1b) mehrere entsprechende Gewindeschrauben aufweisen, um in die Gewindelöcher einzugreifen, um den eingefügten zentralen Körper zu halten.

8. Vorrichtung nach einem der Ansprüche 1 bis 7, wobei der kegelförmige Haltekörper (2) flache Flanken aufweist, die von einander so beabstandet sind, dass sie zwischen das Paar von Platten (1a) einfügbar sind, wobei der ausgeformte Rand einen halbkreisförmigen Bereich aufweist.

9. Vorrichtung nach einem der Ansprüche 1 bis 8, wobei das Paar von Platten (1a) ferner mindestens ein Verankerungsloch (1e) aufweist, das an einem Ende der Vorrichtung angeordnet ist.

10. Vorrichtung nach einem der Ansprüche 1 bis 9, eingerichtet, um zur Inspektion, zur Wartung oder für das Ersetzen von Elementen der Vorrichtung auseinandernehmbar zu sein.

11. Vorrichtung nach einem der vorhergehenden Ansprüche 1 bis 10, wobei jedes Paar der Platten (1a) jeweils durch die Bearbeitung von flachen Metallblechen hergestellt ist.

## Revendications

1. Dispositif d'ancrage de câble, comportant
une paire de plaques (1a) se faisant face parallèlement l'une l'autre,
un corps de support cunéiforme (2) conçu pour être inséré entre ladite paire de plaques (1a), ledit corps de support cunéiforme (2) comportant une bordure profilée convenant à loger un câble (3) enroulé sur elle, et comportant, de plus, au moins une paire d'éléments de retenue (1d) insérés entre lesdites plaques (1a) et agencés de façon à permettre l'insertion entre eux dudit corps de support cunéiforme (2), de manière à exercer une force de serrage sur un câble interposé entre ladite bordure profilée et lesdits éléments de retenue (1d), **caractérisé en ce que**
ledit dispositif d'ancrage comporte deux paires respectives de fentes de forme allongée (1f), chaque paire desdites paires de fentes de forme allongée (1f) présentant une première fente sur une première plaque desdites plaques (1a) et une deuxième fente alignée avec ladite première fente sur une deuxième plaque desdites plaques,
chaque élément desdits éléments de retenue (1d) étant inséré dans une fente respective desdites paires de fentes de forme allongée (1f),
lesdites paires de fentes de forme allongée (1f) étant configurées pour contraindre lesdits éléments de retenue (1d) à exercer ladite force de serrage,
et **en ce que** le couplage entre au moins l'un desdits éléments de retenue (1d) et ladite paire de fentes de forme allongée (1f) dans laquelle il est inséré est conçu pour permettre des déplacements au moins dans une direction longitudinale, d'au moins l'un des éléments de retenue (1d), de manière à d'exercer ladite force de serrage sur ledit câble d'une façon uniforme.

2. Dispositif selon la revendication 1, **caractérisé en ce que** ledit couplage entre au moins l'un desdits éléments de retenue (1d) et lesdites fentes de forme allongée de la paire respective (1f) est conçu, de plus, pour permettre des déplacements dans la direction transversale et des déplacements dans la direction perpendiculaire dudit au moins un desdits éléments de retenue (1d) de manière à exercer ladite force de serrage sur ledit câble d'une façon uniforme.

3. Dispositif selon la revendication 1 ou 2, **caractérisé en ce que** ledit couplage entre les deux dits éléments de retenue (1d) et ladite paire respective de fentes de forme allongée (1f) est de plus conçu pour permettre des déplacements des deux dits éléments de retenue (1d) de manière à d'exercer ladite force de serrage sur ledit câble de façon uniforme.

4. Dispositif selon l'une quelconque des revendications 1 à 3, dans lequel lesdits éléments de retenue (1d) comportent une gorge semi-circulaire sur leur surface interne adaptée pour exercer ladite force de serrage.

5. Dispositif selon l'une quelconque des revendications 1 à 4, comportant de plus une pluralité d'éléments d'écartement (1c) interposés entre ladite paire de plaques.

6. Dispositif selon la revendication 5, **caractérisé en ce que** ladite paire de plaques (1a) comporte de plus une pluralité de paires respectives de trous (1g) pour fixer lesdits éléments d'écartement, dans lequel chacun desdits éléments d'écartement (1c) comporte un corps central intercalé entre ladite paire de plaques (1a), et comportant de plus des moyens de retenue (1b) pour retenir ledit corps central intercalé dans un trou respectif desdits trous (1g).

7. Dispositif selon la revendication 6, dans lequel ledit corps central intercalé comporte une paire de trous taraudés faisant chacun respectivement face à l'un desdits trous (1g), et dans lequel lesdits moyens de retenue (1b) comportent une pluralité de vis filetées respectives appropriées pour s'engager avec lesdits trous taraudés pour retenir ledit corps central intercalé.

8. Dispositif selon l'une quelconque des revendications 1 à 7, dans lequel ledit corps de support cunéiforme (2) comporte des faces plates opposées qui sont distantes l'une de l'autre de façon à être insérées entre ladite paire de plaques (1a), et dans lequel ladite bordure profilée comporte une partie semi-circulaire.

9. Dispositif selon l'une quelconque des revendications 1 à 8, dans lequel ladite paire de plaques (1a) comporte de plus au moins un trou d'ancrage (1e) placé au niveau d'une extrémité dudit dispositif.

10. Dispositif selon l'une quelconque des revendications 1 à 9, configuré pour être démonté en vue de l'examen, de la maintenance ou du remplacement des éléments d'un tel dispositif.

11. Dispositif selon l'une quelconque des revendications 1 à 10, dans lequel chaque plaque de ladite paire de plaques (1a) est fabriquée par usinage d'une tôle métallique plate.
